Europäisches Patentamt

European Patent Office

Office européen des brevets

(19)

(11) Veröffentlichungsnummer: **0 235 665
B1**

(12) # EUROPÄISCHE PATENTSCHRIFT

(45) Veröffentlichungstag der Patentschrift:
**17.01.90**

(51) Int. Cl.⁴: **H02K 49/10**

(21) Anmeldenummer: **87102224.0**

(22) Anmeldetag: **17.02.87**

(54) **Kupplungsvorrichtung.**

(30) Priorität: **25.02.86 DE 3606012**

(43) Veröffentlichungstag der Anmeldung:
**09.09.87 Patentblatt 87/37**

(45) Bekanntmachung des Hinweises auf die Patenterteilung:
**17.01.90 Patentblatt 90/3**

(84) Benannte Vertragsstaaten:
**AT BE CH DE ES FR GB GR IT LI LU NL SE**

(56) Entgegenhaltungen:
**WO-A-86/00163
DE-A- 1 488 509
DE-A- 2 326 068
DE-C- 811 001
DE-C- 1 191 850
DE-C- 1 538 715
GB-A- 854 190
GB-A- 1 372 048**

(73) Patentinhaber: **Deutsche Thomson-Brandt GmbH,
Hermann-Schwer-Strasse 3 Postfach 1307,
D-7730 Villingen-Schwenningen(DE)**

(72) Erfinder: **Schalk, Adelbert, Dipl.-Ing.,
Vogt-Dufner-Strasse 8, D-7743 Furtwangen 6(DE)**

(74) Vertreter: **Einsel, Robert, Dipl.-Ing., Deutsche
Thomson-Brandt GmbH Patent- und Lizenzabteilung
Göttinger Chaussee 76, D-3000 Hannover 91(DE)**

## Beschreibung

Es sind in der Technik verschiedene Kupplungsarten für die Übertragung von richtungswechselnden Längsbewegungen auf rotierende Körper bekannt, bei denen die Längsbewegung, d.h. der Hub, durch in Eingriff stehende Teile übertragen wird. Eine einfache Form ist z.B. durch einen Hebel gegeben, der in einer umlaufende Nut eines rotierenden, längsbeweglichen Körpers eingreift und durch eine Bewegung in axialer Richtung eine Längsbewegung des rotierenden Körpers bewirkt. Um die Reibung zwischen den beweglichen Teilen zu verringern, können Gleit- oder Kugellager zwischengeschaltet werden. Allerdings weisen Kupplungen, bei denen mehrere mechanische Teile wie z.B. Hebel miteinander in Eingriff sind, ein gewisses Spiel bei nicht zu vernachlässigender Reibung auf. Bei einer zentrisch in axialer Richtung auf einen rotierenden Körper zu übertragenden Längsbewegung können außerdem Fluchtungsfehler zwischen dem Hubgeber und dem rotierenden Körper mechanische Überbestimmung auftreten.

Es ist Aufgabe der Erfindung, eine Kupplung derart auszubilden, daß die Hubbewegung auf einen rotierenden Körper in dessen axialer Richtung ohne Spiel, reibungsarm übertragen werden kann. Diese Aufgabe wird durch die im Anspruch 1 beschriebene Erfindung gelöst. Vorteilhafte Weiterbildung der Erfindung sind in den Unteransprüchen beschrieben.

Im Prinzip besteht die Erfindung darin, daß die Kupplung durch magnetische Feldlinien erfolgt, wobei der mechanische Kraftschluß über einen vorzugsweise punktförmigen Kontakt zwischen Hubgeber und rotierendem Körper gegeben ist.

Aus der DE-A 1 488 509 ist zwar eine mit Dauermagneten versehene und aus zwei Kupplungshälften bestehende Magnetkupplung bekannt, wobei zwischen den Kupplungshälften ein gleitender Kontakt besteht, jedoch sind die Kupplungshälften gleichartig ausgebildet, d.h. bei montierter Kupplung steht einem Nordpol der einen Kupplungshälfte ein Südpol der anderen Kupplungshälfte gegenüber. Beide Kupplungshälften sind also, bedingt durch die Anziehungskräfte zweier Magnete, starr zueinander ausgerichtet. Dies ist auch für die angegebene Aufgabe sinnvoll, da ein möglichst großes Drehmoment von der Kupplung übertragen werden soll. Eine Kupplung der beschriebenen Art läßt nur gleiche Drehzahlen für An- und Abtrieb zu.

Demgegenüber ist die Kupplung nach dem vorliegenden Anspruch 1 mit nur einem Magneten ausgerüstet, der einen gleitenden Kontakt zwischen Hubgeber und Rotationsachse zuläßt, d.h. die Achse des Hubgebers kann, aber muß nicht rotieren. Durch die Ausführung des mechanischen Kontaktes zwischen den beiden Kupplungsteilen ist ein Fluchten der Achsen zwischen Hubgeber und axialbeweglichem Körper für die Übertragung einer Hubbewegung nicht erforderlich.

Auch ist in der DE-A 1 488 509 nirgendwo angedeutet, daß die bekannte Kupplung eine Hubbewegung in axialer Richtung übertragen könnte.

Im folgenden soll die Erfindung anhand einer Figur beispielhaft näher beschrieben werden.

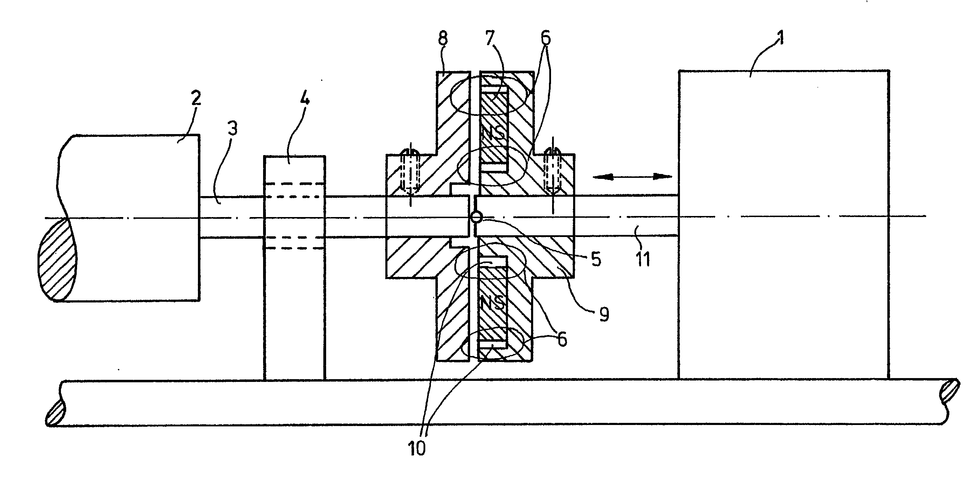

Die Figur 4 zeigt in einer teilweisen Schnittdarstellung die Kupplung zwischen einem Hubgeber 1 und einem rotierenden Körper 2, dessen Achse 3 in Hubrichtung verschiebbar in einem ortsfesten Lager 4 gelagert ist. Die Hubrichtung ist durch den Pfeil angedeutet. Hubgeber 1 und Achse 3 sind über eine Kugel 5 kraftschlüssig miteinander verbunden. Der Kraftschluß zwischen dem in Achsrichtung verschiebbaren rotierenden Körper 2 und dem Hubgeber 1 wird durch die anziehende Wirkung der magnetischen Feldlinien 6 zwischen einem ringförmigen Magnet 7 und einer magnetisierbaren Platte 8, die z.B. aus Weicheisen besteht, gebildet. Der ringförmige Magnet 7 ist auf einer z.B. aus Weicheisen bestehenden Halterung 9 befestigt, die dem magnetischen Rückschluß dient. Um einen optimalen Feldlinienverlauf zwischen Magnet 7 und Platte 8 zu erreichen, sind oberhalb und unterhalb des Magneten 7 nichtmagnetisierbare zentrisch verlaufende Zonen 10 in der Halterung vorgesehen, die z.B. aus Kunststoffringen bestehen, deren Dicke größer ist als der Luftspalt zwischen Magnet 7 und Platte 8. Der Hubgeber 1 kann selbst als rotierende oder auch als ortsfeste Einheit ausgebildet sein. Dabei wird die Hubbewegung z.B. durch einen elektromagnetischen Wandler in Form einer Tauchspule, durch Motorantrieb oder auch durch einen magnetostriktiven Geber bewirkt. Durch die Kugel 5 ist eine exakte Ausrichtung zwischen dem Hubgeber 1 und der rotierenden Welle 3 nicht erforderlich, da die Lagerung der rotierenden Welle 3 durch die richtungsausgleichende Wirkung der Kugel 5 nicht beeinträchtigt wird. Auch kann die Kugel durch die kegelförmig ausgeführt Spitze einer der Wellen 3,11 ersetzt werden. Dabei ist es auch möglich, die Spitze gleichzeitig als ein Lagerteil für die rotierende Welle 3 auszuführen.

Die Hubbewegung selbst wird völlig ohne Spiel in beiden Pfeilrichtungen durch die magnetische Anziehungskraft zwischen Magnet 7 und magnetisierbarer Platte 8 übertragen. Sie muß selbstverständlich den zu übertragenden Kräften in Zugrichtung durch Auswahl der Magnete, Dimensionierung der Platte sowie durch Ausbildung des Luftspaltes zwischen beiden Teilen angepaßt sein.

Es ist bei einer derartigen Anordnung gleich, auf welcher Seite der Kupplung der Magnet 7 bzw. die magnetisierbare Platte 8 angeordnet ist.

Vorzugsweise kann die Erfindung für die Hubbewegung einer Kopftrommel in einem Magnetbandgerät für die Aufzeichnung von Daten angewendet werden.

## Patentansprüche

1. Magnetische Kupplungsvorrichtung zur Übertragung einer Hubbewegung von einem Hubgeber (1) auf einen rotierenden, axial beweglichen Körper (2), wobei zwischen Hubgeber (1) und der Rotationsachse des Körpers (2) ein gleitender punkt- oder flächenförmiger Kontakt besteht, der durch einen Permanentmagneten (7) bewirkt wird, dessen Feldlinien (6) zwischen Hubgeber (1) und rotierendem Körper (2) eine anziehende Wirkung ausüben und durch eine magnetisierbare Platte geschlossen werden, die mit einem Luftspalt, dem Magneten gegenüberstehend, angeordnet ist, wobei der Permanentmagnet entweder auf der Hubgeberseite oder auf der rotierenden Seite der Kupplungsvorrichtung angeordnet ist.

2. Kupplungsvorrichtung nach Anspruch 1, dadurch gekennzeichnet, daß der Kontakt durch ein Kugel (5) gebildet wird.

3. Kupplungsvorrichtung nach Anspruch 1, dadurch gekennzeichnet, daß der Kontakt durch die kegelförmig ausgebildete Spitze einer Welle (3,11) gebildet wird.

4. Kupplungsvorrichtung nach Anspruch 1, dadurch gekennzeichnet, daß der Kontakt durch ein Lager gebildet wird.

5. Kupplungsvorrichtung nach einem der Ansprüche 1 - 4, dadurch gekennzeichnet, daß der Magnet (7) ein Ringmagnet ist, der symmetrisch zur Rotationsachse angeordnet ist.

6. Kupplungsvorrichtung nach einem der Ansprüche 1 - 4, dadurch gekennzeichnet, daß der Magnet (7) von mehreren zur Rotationsachse symmetrisch in einer Ebene angeordneter Magnete gebildet wird.

7. Kupplungsvorrichtung nach einem der Ansprüche 1 - 6, dadurch gekennzeichnet, daß der rotierende Körper (2) die Kopftrommel eines magnetischen Bandaufzeichnungsgerätes ist.

## Claims

1. A magnetic coupling device for transmitting a reciprocating motion from a reciprocation imparter (1) to a rotating, axially movable member (2), wherein there is a sliding point or area contact between reciprocating imparter (1) and the axis of rotation of the member (2), which contact is caused by a permanent (7), of which the lines of flux (6) between reciprocation imparter (1) and rotating member (2) exert an attractive effect and are closed by a magnetizable plate which is disposed with an air gap situated opposite the magnet, the permanent magnet being disposed either at the reciprocation imparter side or at the rotating side of the coupling device.

2. A coupling device according to Claim 1, characterized in that the contact is formed by a ball (5).

3. A coupling device according to Claim 1, characterized in that the contact is formed by the conically formed tip of a shaft (3, 11).

4. A coupling device according to Claim 1, characterized in that the contact is formed by a bearing.

5. A coupling device according to any one of Claims 1–4, characterized in that the magnet (7) is an annular magnet which is disposed symmetrically to the axis of rotation.

6. A coupling device according to any one of Claims 1–4, characterized in that the magnet (7) is formed by a plurality of magnets arranged in one plane symmetrically with the axis of rotation.

7. A coupling device according to any one of Claims 1–6, characterized in that the rotating member (2) is the head drum of a magnetic tape recorder.

## Revendications

1. Dispositif d'accouplement magnétique pour la transmission d'un mouvement par un générateur de course (1) sur un corps mobile en rotation et déplaçable axialement (2), un contact ponctuel ou superficiel coulissant existant entre le générateur de course (1) et l'arbre rotatif du corps (2), qui est réalisé par un aimant permanent (7) dont les lignes de champ (6) exercent une force d'attraction entre le générateur de course (1) et le corps mobile en rotation (2) et qui sont fermées par une plaque aimantable disposée en opposition à l'aimant dont elle est séparée par un entrefer.

2. Dispositif d'accouplement selon la revendication 1, caractérisé en ce que le contact est réalisé par une bille (5).

3. Dispositif d'accouplement selon la revendication 1, caractérisé en ce que le contact est réalisé par la pointe de forme conique d'un arbre (3, 11).

4. Dispositif d'accouplement selon la revendication 1, caractérisé en ce que le contact est formé par un palier.

5. Dispositif d'accouplement selon l'une des revendications 1 à 4, caractérisé en ce que l'aimant (7) est un aimant annulaire disposé symétriquement à l'axe de rotation.

6. Dispositif d'accouplement selon l'une des revendications 1 à 4, caractérisé en ce que l'aimant (7) est formé de plusieurs aimants disposés dans un plan symétriquement à l'axe de rotation.

7. Dispositif d'accouplement selon l'une des revendications 1 à 6, caractérisé en ce que le corps mobile en rotation (2) est un tambour de tête d'un magnétophone.